# EUROPÄISCHE PATENTSCHRIFT

(11) **EP 2 381 268 B1**
(45) Veröffentlichungstag und Bekanntmachung des Hinweises auf die Patenterteilung: **27.06.2012**
(21) Anmeldenummer: 10160720.8
(22) Anmeldetag: 22.04.2010
(51) Int. Cl.: G01S 7/481, G01S 7/483, G01S 17/02

(54) **Sicherheitslaserscanner**
Security laser scanner
Scanner laser de sécurité

(43) Veröffentlichungstag der Anmeldung: 26.10.2011
(73) Patentinhaber: Sick AG, 79183 Waldkirch (DE)
(72) Erfinder: Mack, Stefan, 79104 Freiburg (DE); Krämer, Joachim, 79110 Freiburg (DE); Sigmund, Jörg, 79098 Freiburg (DE)
(74) Vertreter: Ludewigt, Christoph

(56) Entgegenhaltungen:
- EP-A2- 0 897 120
- US-A- 5 455 669
- US-A- 6 153 878

## Beschreibung

Die Erfindung betrifft einen Sicherheitslaserscanner zur Absicherung eines Gefahrenbereichs.

Entfernungsmessende Laserscanner werden in vielen Anwendungen zur Objekterfassung eingesetzt. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Wenn der Überwachungsbereich eine Abtastebene ist, sind mit diesen Polarkoordinaten sämtliche möglichen Objektpositionen zweidimensional erfasst. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Solche Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 oder der US 5,455,669 bekannt. Dabei wird ein Schutzfeld überwacht, das während des Betriebs der Maschine von Bedienpersonal nicht durch Eingriff verletzt werden darf. Erkennt der Laserscanner einen unzulässigen Schutzfeldeingriff, etwa ein Bein einer Bedienperson, so löst er über ein Sicherheitsschaltsignal einen Nothalt der Maschine aus. Bestimmte Eingriffe in das Schutzfeld, beispielsweise durch Maschinenteile zur Materialzuführung, können vorab als zulässig eingelernt werden.

Solche in der Sicherheitstechnik eingesetzten Laserscanner müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder auch Überwachung der Verschmutzung optischer Bauteile, insbesondere einer Frontscheibe.

Da die Sicherheitslaserscanner in der Regel nur-" Sicherheitsfunktion haben, aber nicht für die eigentliche Funktion der Maschine dienen, sollten sie beispielsweise durch ihre Baugröße nicht hinderlich sein und den eigentlichen Arbeitsprozess nicht stören. Das bedeutet, dass sie in erster Linie eine möglichst kleine Bauform aufweisen und darüber hinaus kostengünstig sein sollten.

Aus der DE 102 44 641 A1 ist ein Laserscanner zum Einsatz in Fahrzeugen, insbesondere zur Erfassung der Umgebung, bekannt, bei dem zwei Lichtsender den Abtaststrahl außeraxial auf den Randbereich eines Drehspiegels aussenden. Hier handelt es sich nicht um einen Sicherheitslaserscanner und eine wesentliche Reduktion der Baugröße bewirkt die Anordnung nicht.

Ein weiterer gattungsgemäßer Laserscanner ist aus der US 6,153,878 bekannt.

Es ist Aufgabe der Erfindung, einen verbesserten Sicherheitslaserscanner bereitzustellen, mit dem Miniaturisierungspotentiale ausschöpfbar sind, so dass kleinere Bauformen möglich sind.

Diese Aufgabe wird durch einen Sicherheitslaserscanner mit den Merkmalen des Anspruchs 1 gelöst.

Der erfindungsgemäße Sicherheitslaserscanner zur Absicherung eines Gefahrenbereichs weist eine aus wenigstens vier VCSEL-Laserdioden bestehende Lichtsendeeinheit auf, mit der gepulste Sendelichtstrahlen in einen Überwachungsbereich ausgesandt werden. Die Sendelichtstrahlen werden von einer um eine Drehachse beweglichen Ablenkeinheit periodisch in den Überwachungsbereich abgelenkt, so dass sie diesen periodisch überstreichen. Weiter ist ein Lichtempfänger mit vorgeordneter Empfangsoptik zum Empfang von Remissionslicht vorgesehen, das von einem Objekt in dem Überwachungsbereich remittiert wird. Der Lichtempfänger wandelt das remittierte Licht in Empfangssignale um. Für eine Positionsbestimmung des Objektes im Überwachungsbereich gibt eine Winkelgebereinheit ein für die momentane Winkelposition der Ablenkeinheit repräsentatives Signal aus und in einer Auswerteeinheit wird aus dem Winkelsignal und der Zeit zwischen Aussenden und Empfangen eines Lichtpulses der Positionswert der Reflektion im Überwachungsbereich bestimmt. Falls die Reflektion von einem Objekt stammt, das per Sicherheitsdefinition bei Betrieb der Maschine sich nicht dort befinden sollte, ist zur Ausgabe eines Sicherheitsschaltsignals ein fehlersicherer Ausgang vorgesehen. Das Sicherheitssignal kann dazu dienen, anzuzeigen, wenn ein unzulässiger Eingriff in ein vorgebbares Schutzfeld innerhalb des Überwachungsbereichs festgestellt wurde, um z.B. einen Nothalt der Maschine einzuleiten.

Kern der Erfindung ist die Verwendung von wenigstens vier VCSEL Laserdioden. In bekannten Laserscannern werden zur Erzeugung von Sendelichtpulsen immer nur Kantenemitter-Laserdioden eingesetzt, da nur diese eine ausreichende Leistung für die sichere Erkennung von Objekten mit verschiedensten Oberflächenmaterialien liefern. Dabei wird in einem Laserscanner immer nur eine Laserdiode eingesetzt, da nur ein Sendelichtstrahl benötigt wird und deshalb selbstverständlich aus Kosten und Bauraumgründen dieser nur von einer Laserdiode erzeugt werden braucht.

Von diesem an sich logischen Vorgehen weicht die Erfindung ab und sieht den Einsatz von wenigstens vier VCSEL Laserdioden vor, obwohl deren Peakleistung etwa um einen Faktor 10 kleiner ist als die von Kantenemitter-Laserdioden. Dieser Nachteil wird aber durch den Einsatz mehrerer Laserdioden zumindest zum Teil kompensiert. Dabei ergibt sich allerdings wieder der neue Nachteil, dass die Komponentenzahl erhöht wird. Dennoch ergeben sich für den erfindungsgemäßen Sicherheitslaserscanner bisher nicht erkannte Vorteile, die die Nachteile überwiegen.

Die derzeitig eingesetzten Kantenemitter-Laserdioden erfordern Sendeoptiken mit Brennweiten im Bereich 10-20 mm und Sendelinsendurchmesser von ca. 15 mm. Bei VCSEL-Laserdioden können aufgrund deren kleinerer Emittergrößen Sendebrennweiten im Bereich 5-10 mm und Sendelinsendurchmesser von ca. 7 mm verwendet werden. Weiter benötigen VCSEL-Laserdioden wesentlich kleinere Ansteuerelektroniken, da sie ohne Hochspannung betrieben werden können. Somit kann das Bauvolumen durch die Verwendung von VCSEL-Laserdioden signifikant reduziert werden.

Kantenemitter-Laserdioden erzeugen Spotgrößen auf einem Objekt in 4 m Reichweite von mehreren 10 mm. Dies hat eine relativ grobe, teils sogar überlappende Abtastung des Objekts zur Folge. Besonders bei Objektkanten führen solch große Sendespots zu Messartefakten, sogenannten "Kantenartefakten". Durch die Verwendung von VCSEL-Laserdioden können bei gleichen Kollimationsoptiken kleinere Spots auf dem Objekt erreicht werden, da die VCSEL-Emittergrößen deutlich kleiner sind. Dadurch werden die Kantenartefakte reduziert.

Bei bisherigen Scannern steckt die gesamte Energie in einem einzelnen Sendepuls. Tritt ein Störobjekt (z. B. Sägespan, Regentropfen oder dgl.) mit Abmessungen in ähnlichen Größenordnungen wie der Laserspot in den Sendepfad, wird die gesamte Energie am Störobjekt reflektiert und es kommt zu einem falschen Sicherheitsschaltsignal und Abschaltung der Maschine. Wird die Sendeenergie hingegen gemäß der Erfindung auf mehrere Laserspots der einzelnen VCSEL-Laserdioden verteilt, so kann ein Störobjekt entsprechender Größe nur einen Teil der Spots abdecken. Die übrigen Laserspots treffen auf das weiter entfernte Objekt und ermöglichen damit dessen Detektion. Es kommt nicht mehr zu Fehlabschaltungen, wodurch die Verfügbarkeit der Maschine erhöht ist.

Ein weiterer wesentlicher Vorteil der Erfindung ist, dass VCSEL-Laserdioden dazu geeignet sind mit sehr hohen Pulsraten (im MHz Bereich) betrieben werden zu können. Dadurch eröffnet sich der Einsatz neuer Messtechniken, die auf einer statistischen Auswertung vieler Pulse basieren und die wegen der hohen Pulsraten dann auch in einem Scanner einsetzbar sind, ohne Einbußen der Ansprechgeschwindigkeit oder der Ortsauflösung.

Weitere Ausführungsformen sind Gegenstand der abhängigen Ansprüche.

In einer Ausgestaltung der Erfindung sind die VCSEL-Laserdioden so angeordnet, dass die Sendelichtstrahlen gleichverteilt auf dem Umfang der Empfängerapertur angeordnet sind. Wenn die gesamte Laserstrahlung beispielsweise auf einer Ringkette von ca. 25 mm Durchmesser um die Empfangsoptik herum aufgeteilt ist, ist es nicht möglich, dass alle Laserstrahlen gleichzeitig eine 7 mm große Pupille eines Beobachterauges treffen. Dadurch können unter Berücksichtigung der Laserklassifizierung 1 M wesentlich höhere Peakgesamtleistungen ausgesandt werden als bei einem einstrahligen Lasersender. Die Augensicherheit ist dennoch erreicht.

Wenn die Empfangsoptik so montiert ist, dass sie mit der Ablenkeinheit mitbewegbar ist, kann die Bauform weiter verkleinert werden, denn der Lichtempfänger kann dann erheblich näher an die Ablenkeinheit herangerückt werden.

In Weiterbildung der Erfindung ist eine Laserdiodensteuereinheit vorgesehen zum gleichzeitigen Pulsen der einzelnen Laserdioden. Jede einzelne Laserdiode hat einen natürlichen Amplitudenjitter. Wenn jedoch alle Laserdioden gleichzeitig den Lichtpuls aussenden, ist aufgrund der Statistik der Amplitudenjitter des aus den Einzelpulsen addierten Gesamtpulses geringer, so dass folglich auch das Empfangssignal einen niedrigeren Jitter aufweist und eine zuverlässigere Detektion möglich ist.

In einer weiteren vorteilhaften Weiterbildung sind mit der Laserdiodensteuereinheit die einzelnen Laserdioden separat ansteuerbar. Daraus ergeben sich zwei wesentliche Vorteile, nämlich zum einen die Anpassbarkeit der Sendeleistung und zum anderen eine neue Art der Verschmutzungsüberwachung der Frontscheibe und damit einhergehende Bauraumreduzierung.

Durch eine anpassbare Sendeleistung kann die Dynamik der Empfängerelektronik reduziert werden und damit kann die Empfängerelektronik einfacher, kostengünstiger und kleinbauender ausgelegt werden. Die Empfängerelektronik bisheriger Laserscanner muss eine Dynamik von ca. 10.000 beherrschen. Dies liegt daran, dass das Tastgut nicht vorhersagbar ist. Der Laserscanner muss daher sowohl auf ein Tastgut mit einer diffusen Reflektivität von 2 % (schwarzer Stoff) als auch auf einen Retroreflektor als Tastgut ausgelegt sein. Hinzu kommt, dass die Höhe des Laserpulsechos auch von der Reichweite abhängt (bei 4 m Reichweite ca. Faktor 3). Wenn nun nach der Erfindung die Laserdioden bei jeder Scannermessung einzeln ansteuerbar sind und wird z.B. ein Tastgut mit hoher Remission erwartet, dann kann die Laserdiodensteuereinheit nur einen Teil oder sogar nur eine der Laserdioden zur Aussendung eines Laserpulses ansteuern. Wird hingegen ein Tastgut mit Minimalremission erwartet, können alle Laserdioden zum gleichzeitigen Senden angesteuert werden. Somit wird die gesamte emittierte Laserpeakleistung über die Anzahl der emittierenden Laserdioden und der erwarteten Objektremission angepasst.

In bisherigen Laserscannern (vgl. DE 43 40 756 A1) wird die Frontscheibenverschmutzung durch ein getrenntes optisches System, bestehend aus LEDs und zugeordneten Photodioden, ermittelt. Dabei durchstrahlt das Licht der LEDs die Frontscheibe und wird von den Photodioden gemessen. Dazu muss die Frontscheibe geneigt sein, damit sowohl die LEDs als auch die Photodioden innerhalb des Scannergehäuses zu liegen kommen. Das führt zu einer platzgreifenden Frontscheibe in Form eines Kegelstumpfes.

In einer Weiterbildung der Erfindung ist eine Verschmutzungsüberwachungseinheit vorgesehen. Werden die Laserdioden von der Laserdiodensteuereinheit nacheinander angesteuert und die Echosignale von zwei aufeinanderfolgenden Pulsen unterschiedlicher Laserdioden verglichen, so lässt sich daraus eine inhomogene Verschmutzung der Frontscheibe detektieren, denn die einzelnen Laserdioden durchstrahlen die Frontscheibe an unterschiedlichen Orten. Da eine Verschmutzung der Frontscheibe in der Realität nie homogen sein wird, kann somit die Verschmutzung ermittelt werden. Die Frontscheibe braucht dann keine Kegelstumpfform mehr zu haben und kann erheblich kleiner sein. Bei gleich großer Eintrittspupille (= Größe eines Spiegels der Ablenkeinheit) reduziert eine zylindrisch ausgeformte Frontscheibe den Scanner im Durchmesser um die Hälfte.

Ein weiterer Vorteil der Laserdiodensteuereinheit ist die Möglichkeit während des Abscannens einer Kante die einzelnen Laserdioden geeignet anzusteuern, um die Kante sicherer vermessen zu können: z. B. können zuerst nur die bezüglich Scanrichtung hinteren Laserdioden angesteuert werden. Befindet sich die Kante mittig im Sichtfeld der Empfängeroptik, dann werden nur noch die vorderen Laserdioden angesteuert. Somit wird erreicht, dass das Echo immer nur von einer Seite der Kante stammt - Doppelechos werden dadurch unterdrückt.

Ein weiterer Vorteil der Laserdiodensteuereinheit ist die Möglichkeit, den relativen zeitlichen Abstand der Laseremission der verschiedenen Laserdioden einzustellen. So können z.B. elektronische Signallaufzeitunterschiede kompensiert werden, damit der Gesamtpuls die gleich Pulsbreite besitzt wie ein Einzelpuls. Durch einen bewusst herbeigeführten zeitlichen Versatz kann anderseits auch die Breite oder Form des Gesamtpulses gezielt beeinflusst werden.

Die einzelnen Laserdioden können sich auch hinsichtlich ihrer Emissionswellenlänge unterscheiden: z. B. kann eine Laserdiode im sichtbaren Spektralbereich und die übrigen bei ca. 900nm emittieren. Diese Anordnung hat den Vorteil, dass durch den einen sichtbaren Laserstrahl die Lage des Scanfelds durch den Benutzer ohne Hilfsmittel sichtbar ist. Die einzelnen Laserdioden können sich auch hinsichtlich ihres Polarisationszustandes unterscheiden.

In einer Weiterbildung der Erfindung sind die Sendelichtstrahlen mit kleinem Winkel zur optischen Achse der Empfängeroptik hin geneigt.

Die Erfindung wird nachstehend auch hinsichtlich weiterer Merkmale und Vorteile beispielhaft anhand von Ausführungsformen und unter Bezug auf die beigefügte Zeichnung näher erläutert. In der Zeichnung zeigen:
- Fig. 1: eine schematische Schnittdarstellung einer Ausführungsform des Laser- scanners;
- Fig. 2: eine Frontalansicht auf eine Empfangsoptik und der Lichtsendeeinheit gemäß Figur 1;
- Fig. 3a bis 3c: Ansichten in Richtung der Empfangslichtstrahlen auf die Ablenkeinheit;
- Fig. 4: eine Schnittdarstellung einer weiteren Ausführungsform des erfindungs- gemäßen Laserscanners.

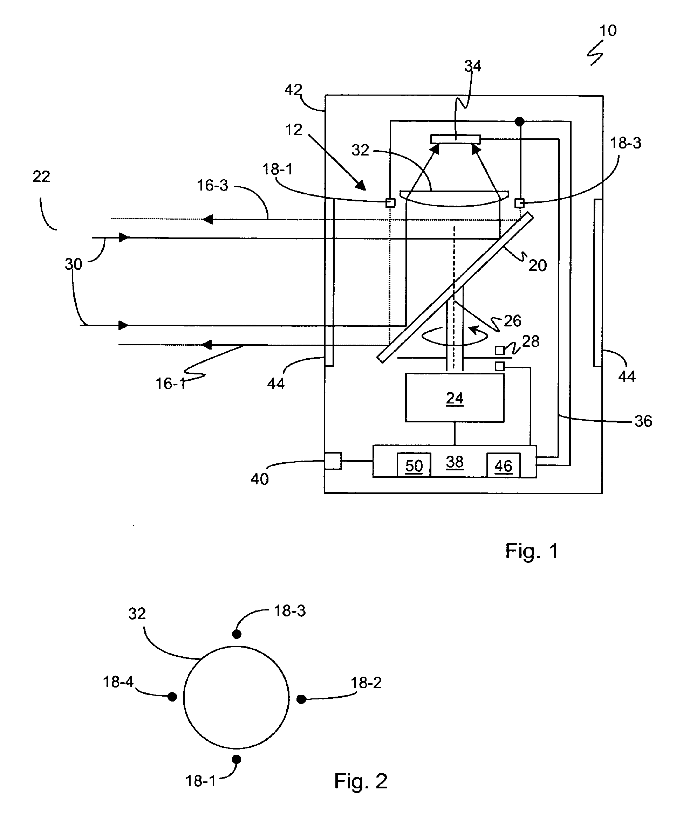

Figur 1 zeigt eine schematische Schnittdarstellung durch einen erfindungsgemäßen Sicherheitslaserscanner 10, der im Folgenden auch einfach als Scanner bezeichnet wird. Eine Lichtsendeeinheit 12 zum Aussenden von gepulsten Sendelichtstrahlen 16 weist wenigstens vier einzelne VCSEL-Laserdioden 18-1 bis 18-4 auf. Die Sendelichtstrahlen 16 werden über eine Ablenkeinheit 20 in einen Überwachungsbereich 22 gelenkt und dort von einem gegebenenfalls vorhandenen Objekt remittiert. Die Lichtablenkeinheit 20 ist als Drehspiegel ausgestaltet, die durch Antrieb eines Motors 24 kontinuierlich um eine Drehachse 26 rotiert. Die jeweilige Winkelstellung wird über einen Encoder 28 erfasst. Die Sendelichtstrahlen 16 überstreichen somit den durch die Rotationsbewegung erzeugten Überwachungsbereich 22.

Das remittierte Licht gelangt wieder zu dem Scanner 10 zurück, wird über die Ablenkeinheit 20 und durch eine Empfangsoptik 32 auf einen Lichtempfänger 34, beispielsweise einer Photodiode, geführt und dort detektiert. Der von der Empfangsoptik 32 definierte Empfangslichtbereich ist durch seine Randstrahlen 30 dargestellt. Der Lichtempfänger 34 erzeugt aus den von dem Objekt in dem Überwachungsbereich 22 remittierten Sendelichtpulsen entsprechende Empfangssignale, die über eine Leitung 36 an eine Auswerteeinheit 38 geführt werden. Anhand des Empfangssignals des Lichtempfängers 34 kann aus der Winkelstellung der Ablenkeinheit 20 mittels des Encoders 28 auf die Winkellage erfasster Objekte in dem Überwachungsbereich 22 geschlossen werden.

Zusätzlich wird in der Auswerteeinheit 38 die Laufzeit der einzelnen Laserlichtpulse von ihrem Aussenden bis zu dem Empfang nach Reflexion an dem Objekt in dem Überwachungsbereich 22 ermittelt. Aus der Lichtlaufzeit wird unter Verwendung der Lichtgeschwindigkeit auf die Entfernung des Objektes von dem Sensor 10 geschlossen. Dafür ist die Auswerteeinheit 38 mit den Laserdioden 18-1 bis 18-4, dem Lichtempfänger 34, dem Motor 24 und dem Encoder 28 verbunden. Somit stehen über Winkel und Entfernung zweidimensionale Polarkoordinaten aller Objekte in dem Überwachungsbereich 22 zur Verfügung.

Wird in der Auswerteeinheit 38 das detektierte Remissionslicht einem unzulässigen Objekt in einem vorgegebenen Schutzfeld, das innerhalb des Überwachungsbereichs 22 gelegen ist, zugeordnet, kann ein Sicherheitsschaltsignal über einen fehlersicheren Ausgang 40 (auch OSSD genannt, Output Signal Switching Device) bereitgestellt werden. Das Sicherheitssignal löst beispielsweise einen Nothalt einer angeschlossenen und von dem Sensor 10 überwachten Maschine aus. Die Auswertungseinheit 38 vergleicht dazu die Objektpositionen mit dem Schutzfeld, dessen Geometrie in der Auswertungseinheit 38 durch entsprechende Parameter vorgegeben oder konfiguriert ist. Damit erkennt die Auswertungseinheit 38, ob ein Schutzfeld verletzt ist, also ob sich ein unzulässiges Objekt darin befindet, und schaltet je nach Ergebnis den fehlersicheren Ausgang 40.

Alle genannten Funktionskomponenten sind in einem Gehäuse 38 angeordnet, das im Bereich des Lichtaus- und Lichteintritts eine Frontscheibe 44 aufweist. Die Frontscheibe 44 ist im Wesentlichen zylindrisch ausgebildet, um einen großen, wenn möglich 360° Sichtbereich zu erlauben.

Figur 2 illustriert in einer Frontalansicht der Empfangsoptik 24, also entlang der optischen Achse 26 gesehen, die Positionen der Laserdioden 18-1 bis 18-4, die gleichverteilt auf dem Umfang der Empfängerapertur angeordnet sind. Im Prinzip können auch mehr als vier, beispielweise acht oder zehn Laserdioden, um die abstrahlbare Leistung zu erhöhen, auf dem Umfang angeordnet sein.

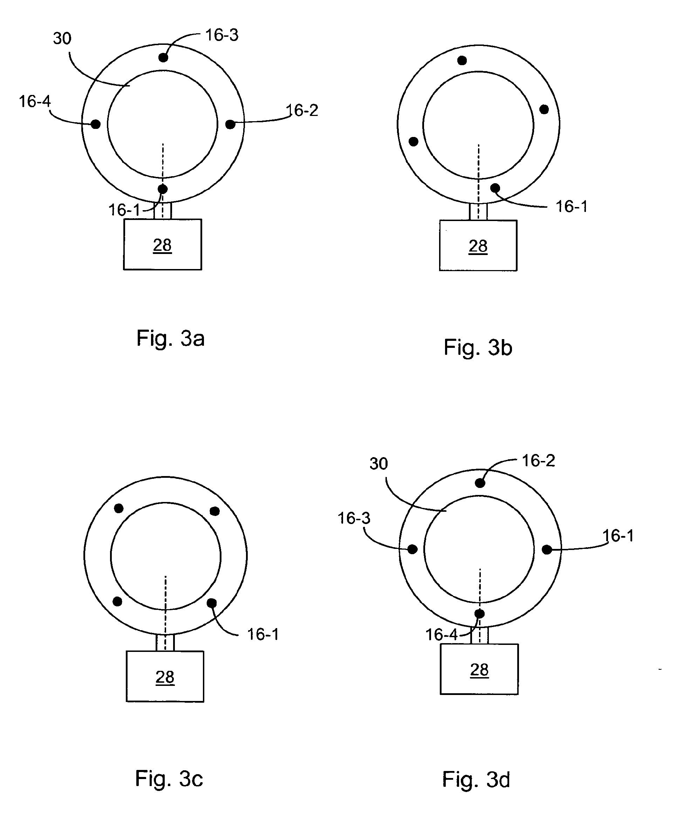

In den Fig. 3a bis 3d sind Ansichten auf die Ablenkeinheit 20 in Richtung der Empfangslichtstrahlen dargestellt, um den Verlauf und die Positionierung der Sendelichtstrahlen 16-1 bis 16-4, insbesondere im Verhältnis zum Empfangslichtbereich 30 des remittierten Lichts, zu verdeutlichen. Der an sich elliptische Drehspiegel 20 zeigt sich in einer solchen Ansicht, also in der 45° Projektion, als Kreis. Fig. 3a entspricht der Winkelstellung der Ablenkeinheit 20 aus Fig.1, die als 0° definiert sein soll. Dargestellt sind die Auftreffpunkte der vier Sendelichtstrahlen 16-1 bis 16-4 auf dem Drehspiegel 20. Mit Drehung des Drehspiegels 20 "wandern" die Auftreffpunkte "in die Runde". So entspricht die Fig. 3b einer Winkelstellung von etwa 20°, die Fig. 3c von 45° und die Fig. 3d schließlich von 90°.

Die Laserdioden 18-1 bis 18-4 werden von einer Laserdiodensteuereinheit 48 angesteuert. Diese kann so ausgebildet oder programmierbar sein, dass alle Laserdioden gleichzeitig pulsen und/oder dass jede einzelne Laserdiode separat ansteuerbar ist.

Durch eine anpassbare Gesamtsendeleistung bei separater Ansteuerung kann die Dynamikanforderung an die Empfängerelektronik reduziert werden wie eingangs erläutert.

Des Weiteren ist eine Verschmutzungsüberwachungseinheit 50 vorgesehen, mit der eine Überwachung der Frontscheibe 44 auf Verschmutzung möglich ist. Dazu werden die Laserdioden 18-1 bis 18-4 von der Laserdiodensteuereinheit 46 unmittelbar nacheinander angesteuert und die Remissionssignale von diesen zwei aufeinanderfolgenden Pulsen unterschiedlicher Laserdioden verglichen. Da die einzelnen Laserdioden die Frontscheibe zwar an unterschiedlichen Orten durchstrahlen aber dennoch fast dieselbe Objektstelle antasten, lässt sich aus dem Vergleich des Remissionslichts der beiden Pulse eine inhomogene Verschmutzung der Frontscheibe ermitteln.

Die einzelnen Laserdioden können sich auch hinsichtlich ihrer Emissionswellenlänge unterscheiden: z. B. kann eine Laserdiode im sichtbaren Spektralbereich und die übrigen bei ca. 900nm emittieren.

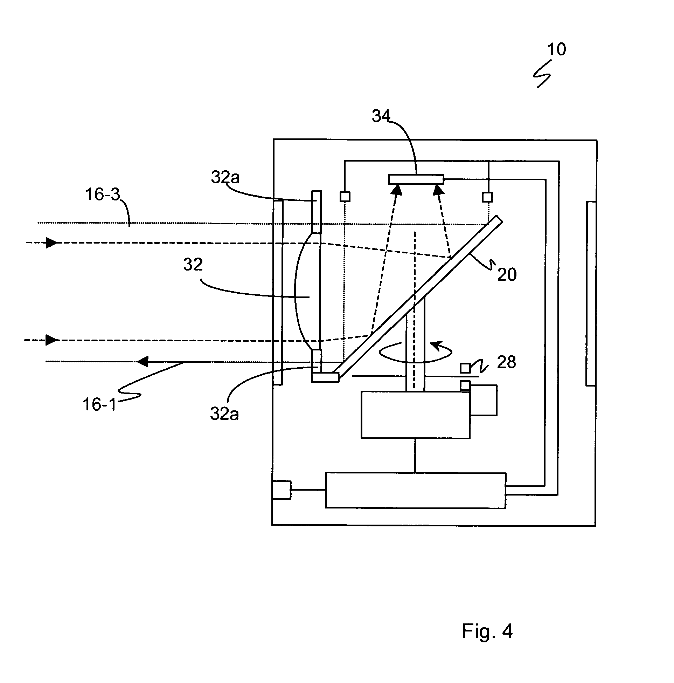

In einer weiteren Ausführungsform, die in Fig. 4 dargestellt ist, bezeichnen weiterhin gleiche Bezugszeichen die gleichen Merkmale. Diese Ausführungsform unterscheidet sich von der Ausführungsform gemäß Fig. 1 in der Anordnung der Empfangsoptik 32. In diesem Fall ist die Empfangsoptik 32 mit dem Drehspiegel 20 verbunden und dreht sich mit. Indem die Empfangsoptik 32 sich mit der Ablenkeinheit 20 mitdreht, wirkt sie schon fokussierend auf den remittierten Lichtstrahl, eher dieser auf die Ablenkeinheit 20 trifft. Dadurch kann der Lichtempfänger 34 bei gleicher effektiver Brennweite wesentlich tiefer angeordnet werden als bei einer der Ablenkeinheit nachgeordneten Empfangsoptik. Der Scanner 10 benötigt so nur etwa die halbe Bauhöhe.

Damit die Sendelichtstrahlen 16-1 bis 16-4 aber keine Strahlformung erfahren, weist die Empfangsoptik 32 zusätzlich zu der optisch wirksamen Fläche, beispielsweise eine Sammellinse, ein umlaufendes planparalles Ringfenster 32a auf.

Bei einer Variante dieser Ausführungsform sind die Empfangsoptik und der Drehspiegel monolithisch oder über einen schmalen Galgen miteinander verbunden, so dass die Sendelichtstrahlen zwischen dem Drehspiegel und der Frontscheibe an der Empfangsoptik vorbei verlaufen. Das Ringfenster 32a entfällt in dieser Variante, die den Vorteil einer hohen Kanaltrennung zwischen dem Sende- und dem Empfangslicht hat.

In einer weiteren, nicht dargestellten Ausführungsform ist die Ablenkeinheit als Hohlspiegel ausgebildet. Dann kann auf die Empfangsoptik 32 verzichtet werden und weiterer Bauraum gewonnen werden. Damit die Sendelichtstrahlen aber weiterhin in die korrekte Richtung um 90° umgelenkt werden, weist der Hohlspiegel in dem Ringbereich, in dem die Sendelichtstrahlen auftreffen, eine planparallele Ringscheibe auf.

## Patentansprüche

1. Sicherheitslaserscanner zur Absicherung eines Gefahrenbereichs,
- mit einer Lichtsendeeinheit (12) zum Aussenden von gepulsten Sendelichtstrahlen (16-1 bis 16-4) in einen Überwachungsbereich (22),
- einer um eine Drehachse (26) beweglichen Ablenkeinheit (20) zur periodischen Ablenkung der Sendelichtstrahlen (16-1 bis 16-4) in den Überwachungsbereich (22),
- einem Lichtempfänger (34) zum Erzeugen eines Empfangssignals aus den von einem Objekt in dem Überwachungsbereich (22) remittierten Sendelichtimpulsen,
- einer dem Lichtempfänger (34) vorgeordneten Empfangsoptik (32),
- einem fehlersicheren Ausgang (40), auf dem ein Sicherheitsschaltsignal ausgebbar ist, wenn ein unzulässiger Eingriff in ein vorgebbares Schutzfeld innerhalb des Überwachungsbereichs (22) durch eine Auswerteeinheit (38) festgestellt wurde
**dadurch gekennzeichnet dass**
- eine Winkelgebereinheit (28), ein für die momentane Winkelposition der Ablenkeinheit repräsentatives Signal ausgibt,
- die Auswerteeinheit (38) aus dem Winkelsignal und der Zeit zwischen Aussenden und Empfangen eines Lichtpulses einen Positionswert der Reflexion im Überwachungsbereich bestimmt,
- die Lichtsendeeinheit (12) wenigstens vier einzelne VCSEL-Laserdioden (18-1, 18-3) aufweist, deren Sendelichtstrahlen im Wesentlichen parallel verlaufen.

2. Scanner nach Anspruch 1, **dadurch gekennzeichnet, dass** die VCSEL-Laserdioden so angeordnet sind, dass die Sendelichtstrahlen gleichverteilt auf dem Umfang der Empfängerapertur angeordnet sind.

3. Scanner nach einem der vorhergehenden Ansprüche, wobei die Empfangsoptik so montiert ist, dass sie mit der Ablenkeinheit mitbewegbar ist.

4. Scanner nach einem der vorhergehenden Ansprüche, **dadurch gekennzeichnet, dass** eine Laserdiodensteuereinheit vorgesehen ist, zum gleichzeitigen Pulsen der einzelnen Laserdioden.

5. Scanner nach einem der vorhergehenden Ansprüche, **dadurch gekennzeichnet, dass** mit der Laserdiodensteuereinheit die einzelnen Laserdioden separat ansteuerbar sind, wodurch der aus Überlagerung der Einzelpulse resultierende Gesamtpuls bezüglich Höhe, Breite und Form einstellbar ist.

6. Scanner nach Anspruch 5, **dadurch gekennzeichnet, dass** eine Frontscheiben-Verschmutzungsüberwachungseinheit vorgesehen ist, mit der die Empfangssignale der Reflexionen einzelner, verschiedener Laserdioden auswertbar sind und daraus eine Verschmutzung der Frontscheibe ermittelbar ist.

7. Scanner nach einem der vorhergehenden Ansprüche, **dadurch gekennzeichnet, dass** die Laserdioden Licht unterschiedlicher Wellenlänge emittieren.

8. Scanner nach einem der vorhergehenden Ansprüche, **dadurch gekennzeichnet, dass** die Sendelichtstrahlen mit kleinem Winkel zur optischen Achse der Empfängeroptik hin geneigt sind.

## Claims

1. Safety laser scanner to secure a hazardous area,
- with a light-emitting unit (12) for emitting pulsed light (16-1 to 16-4) into a monitored area (22),
- a deflecting unit (20) which is rotatable about a rotational axis (26) for periodic deflection of the emitted light beams (16-1 to 16-4) into the monitored area (22),
- a light receiver (34) for generating a receiving signal from the emitted light pulses diffusely reflected off an object in the monitored area (22),
- a receiving optics (32) which is arranged upstream of the light receiver (34),
- a fail-safe output (40) with which a safety switching signal is emittable if an unauthorized intrusion into a predeterminable protective field inside the monitored area (22) has been detected by an evaluation unit (38),
**characterized in that**
- an angle encoder unit (28) outputs a signal which is representative for the momentary angular position of the deflection unit,
- the evaluation unit (38) determines a position value of the reflection in the monitored area from the angle signal and the time between emitting and receiving a light pulse,
- the light-emitting unit (12) comprises at least four individual VCSEL laser diodes (18-1, 18-3) which light beams extend substantially parallel.

2. Scanner according to claim 1, **characterized in that** the VCSEL laser diodes are arranged so that the transmitted light beams are arranged uniformly distributed on the periphery of the receiver aperture.

3. Scanner according to one of the preceding claims, wherein the receiving optics is mounted so that it is movable together with the deflection unit.

4. Scanner according to any preceding claim, **characterized in that** a laser diode controlling unit is provided for simultaneous pulsing of the individual laser diodes.

5. Scanner according to one of the preceding claims, **characterized in that** the individual laser diodes are controllable separately by the laser diode control unit, thereby the total pulse which results from the superposition of the individual pulses is adjustable with regard to pulse height, width and shape.

6. Scanner according to claim 5, **characterized in that** a front window contamination detection unit is provided with which the reception signals of the reflections of individual, different laser diodes can be evaluated and from this a contamination of the front window can be determined.

7. Scanner according to any preceding claim, **characterized in that** the laser diodes emit light at different wavelengths.

8. Scanner according to one of the preceding claims, **characterized in that** the transmitted light beams are inclined with a small angle towards the optical axis of the receiving optics.

## Revendications

1. Scanner laser de sécurité pour sécuriser une zone dangereuse,
- avec une unité d'émission de lumière (12) pour émettre de la lumière pulsée (16-1 à 16-4) dans une zone surveillée (22),
- une unité de déviation (20) qui peut tourner autour d'un axe de rotation (26) pour la déviation périodique des faisceaux de lumière émis (16-1 à 16-4) dans la zone surveillée (22),
- un récepteur de lumière (34) pour générer un signal de réception à partir des impulsions de la lumière reflétées de manière diffuse par un objet dans la zone surveillée (22),
- un système optique de réception (32) qui est disposé devant le récepteur de lumière (34),
- une sortie des signaux de sécurité (40) avec laquelle un signal de commutation de sécurité peut être émis si une intrusion non-autorisée dans un champ de protection prédéterminé à l'intérieur de la zone surveillée (22) a été détectée par une unité d'évaluation (38),
**caractérisé en ce que**
- une unité de codeur angulaire (28) délivre un signal qui est représentatif pour la position momentanée angulaire de l'unité de déviation,
- l'unité d'évaluation (38) détermine une valeur de position de la réflexion dans la zone surveillée à partir du signal d'angle et le temps entre l'émission et la réception d'une impulsion lumineuse,
- l'unité d'émission de lumière (12) comprend au moins quatre diodes laser VCSEL individuelles (18-1, 18-3) dont les faisceaux lumineux s'étendent sensiblement parallèles.

2. Scanner selon la revendication 1, **caractérisé en ce que** les diodes laser VCSEL sont agencées de telle sorte que les rayons lumineux d'émission sont disposés uniformément répartis sur la périphérie de l'ouverture du récepteur.

3. Scanner selon l'une des revendications précédentes, **caractérisé en ce que** le système optique de réception est monté de sorte qu'il est déplaçable conjointement avec l'unité de déviation.

4. Scanner selon l'une des revendications précédentes, **caractérisé en ce qu'**une unité de commande des diodes laser est prévue pour émettre des impulsions simultanées des diodes laser individuelles.

5. Scanner selon l'une des revendications précédentes, **caractérisé en ce que** les diodes laser individuelles sont contrôlables séparément par l'unité de commande des diodes laser, par laquelle l'impulsion totale qui résulte de la superposition des impulsions individuelles est réglable concernant la hauteur d'impulsion, la largeur et la forme.

6. Scanner selon la revendication 5, **caractérisé en ce qu'**une unité de détection de la contamination de la vitre avant est prévue avec laquelle les signaux de réception des réflexions des diodes laser individuelles et différentes peuvent être évalués et par cela une contamination de la vitre avant peut être déterminée.

7. Scanner selon l'une des revendications précédentes, **caractérisé en ce que** les diodes laser émettent de la lumière des longueurs d'onde différentes.

8. Scanner selon l'une des revendications précédentes, **caractérisé en ce que** les rayons lumineux d'émission sont inclinés avec un petit angle vers l'axe optique de l'optique de réception.
